# EUROPEAN PATENT APPLICATION

(11) **EP 1 721 643 A1**
(43) Date of publication of application: **15.11.2006**
(21) Application number: 04771030.6
(22) Date of filing: 29.07.2004
(51) Int. Cl.: A63F 13/00, G06T 17/40

(54) **GAME SOFTWARE AND GAME DEVICE**

(30) Priority: 03.03.2004 JP 2004059697
(71) Applicant: Konami Corporation, Chiyoda-ku, Tokyo 100-6330 (JP)
(72) Inventor: YOSHIIKE, Hiroaki, c/o Konami Corporation, Tokyo 1066112 (JP)
(74) Representative: Hengelhaupt, Jürgen
(86) International application number: PCT/JP2004/010817
(87) International publication number: WO 2005/084766

(57) **Abstract**

A player can freely change a movement path of a virtual camera from a default path MP_{D} through an input means. If the virtual camera CM approaches a background object WL_{R}, the movement path changed by the player is corrected, making the virtual camera apart from the corresponding background object, so that the virtual camera CM is controlled not to enter the background object WL_{R}. Even if a field FD, CV has many obstacles, a proper photographed image can be stably displayed while flexibly setting a position of the camera.

## Description

### TECHNICAL FIELD

The invention relates to game software and a game machine for stably displaying a proper photographed image while flexibly setting a position of a camera even if a field has many obstacles therein.

### BACKGROUND ART

"Game software" in the specification includes program itself and various kinds of data related to the program if necessary. It is not always necessary to relate "game software" to the data, but "game software" has always program. And, "the related various kinds of data" may be stored in a memory means, such as a ROM disc, together with the program. Furthermore, these data may be stored in an outside memory means so as to be freely read out through a communication medium means, such as the Internet.

In such kind of game software, a virtual camera follows a character which moves in a narrow path in a field having many obstacles, such as a wall. A possible method in such a case is that a movement path of a virtual camera is fixedly set in advance in a path, and the virtual camera is moved along this movement path. It is convenient to fix this movement path of the virtual camera without freely changing since such a path is narrow in its width, and a position of the camera is limited in order to obtain a proper (that is, the virtual camera does not enter a wall or the like.) photographed image.

If the movement path of the virtual camera is completely fixed, the game software does not have a flexibility corresponding to an individuality of each user since the individualities of the users are respectively different.

The method to be taken in this case may be that the virtual camera freely follows a character without fixedly setting the movement path of the virtual camera. If so, the virtual camera enters a wall or so with a slight movement of a character in the narrow path, so that it is difficult to stably obtain a proper photographed image. Under this situation, flexible setting of a position of the camera and stable display of a proper photographed image are desired to be simultaneously realized.

Then, the object of the present invention is to provide game software and a game machine for stably displaying a proper photographed image while flexibly setting a position of the camera even if a field has many obstacles therein, taking the above-mentioned circumstances into consideration.

### DISCLOSURE OF THE INVENTION

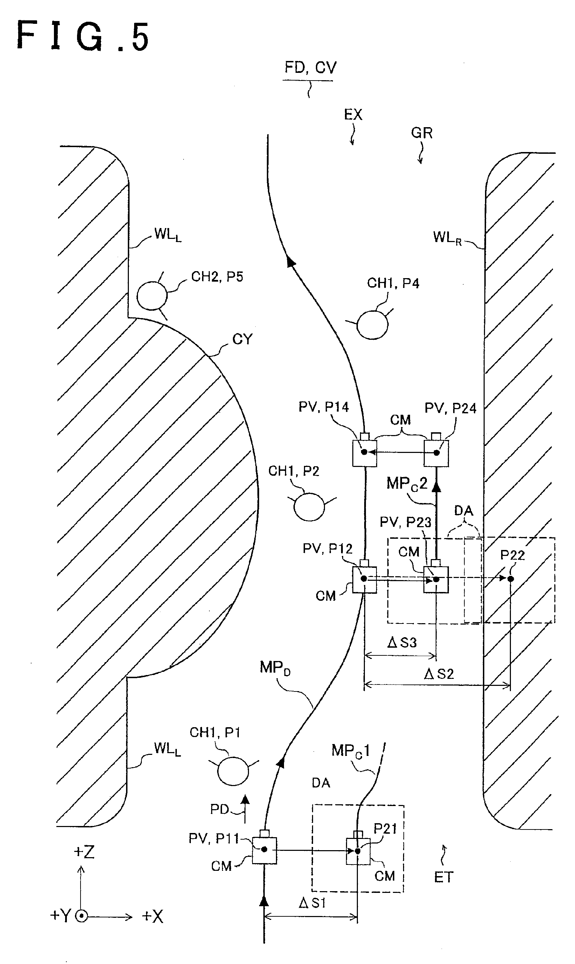

The invention is game software (GSW) having a program for getting a computer (1) to execute a game for controlling to move an operation object (e.g. CH1) operable according to a signal from an input means (14) in a field (FD) produced in a three-dimensional virtual space (3DS), comprising:
the game software (GSW) having program for getting the computer (1) to further execute the following procedures:
   a procedure for producing and locating polygon (PGP), for producing polygons of the operation object (CH1) and a background obj ect (e.g. WL_{R}) comprising the field (e.g. CV) and for locating the polygons in the three-dimensional virtual space (3DS);
   a procedure for controlling to move operation object (PGP), for controlling to move the operation object (CH1) in the three-dimensional virtual space (3DS), where the background object (WL_{R}) was located by the procedure for producing and locating polygon (PGP), according to the signal from the input means (14);
   a procedure for controlling to move virtual camera (CWP), for controlling to move a virtual camera (CM) for setting a view area inside the three-dimensional virtual space (3DS) so as to follow the operation object (CH1) controlled to be moved by the procedure for controlling to move operation object (PGP) on a path which is set in the three-dimensional virtual space (3DS) as a movement path (MP) of the virtual camera;
   a procedure for changing movement path (MPP), for changing the movement path (MP) of the virtual camera from a default path (MP_{D}) which is in advance set in the three-dimensional virtual space (3DS) into a different path (e.g. MPc1 as shown in Fig.5) rather than the default path according to the signal from the input means (14);
   a procedure for instructing changed path movement (MPP), for instructing the procedure for controlling to move virtual camera (CWP) to control the virtual camera (CM) to move on the movement path (e.g. MPc1 as shown in Fig.5) changed by the procedure for changing movement path (MPP) from the default path (MP_{D}) ;
   a procedure for producing and displaying two-dimensional image (PDP, ANP), for producing a two-dimensional image by rendering of the polygon inside the view area which is set by the virtual camera (CM) controlled to be moved by the procedure for controlling to move virtual camera (CWP), and for displaying the two-dimensional image on a display (11) ;
   a procedure for computing distance (SMP), for computing a distance between the virtual camera (CM) which moves on the movement path (MP) changed by the procedure for changing movement path (MPP) and the background object (WL_{R}) located in the three-dimensional virtual space (3DS) by the procedure for producing and locating polygon (PGP) ;
   a procedure for detecting background object (SMP), for detecting the background object (WL_{R}) having the distance computed by the procedure for computing distance (SMP), which is a predetermined value (e.g. Xₒ) or lower; and
   a procedure for instructing to correct movement path (SMP), for instructing the procedure for changing movement path (MPP) to correct the changed movement path (e.g. MPc2 as shown in Fig.5) so as to make the virtual camera (CM) apart from the background object (WL_{R}) detected by the procedure for detecting background object (SMP).

According to this aspect of the invention, if the virtual camera (CM) approaches the background object (e.g. WL_{R}), the movement path (MP) is corrected (e.g. into MPc2 as shown in Fig.5) so as not to further make the virtual camera (CM) close to the background object (WL_{R}), so that the virtual camera does not enter the background object. Even if a field has many obstacles, a proper photographed image can be stably displayed while flexibly setting a position of the camera.

The other aspect of the invention is the game software, wherein the game software (GSW) has a program for getting the computer (1) to further execute a procedure for controlling view direction (CWP), for controlling a view direction (PD) of the virtual camera, and a procedure for instructing change of view direction (CWP), for instructing the procedure for controlling view direction (CWP) to change the view direction (PD) of the virtual camera according to the signal from the input means (14).

According to this aspect of the invention, a player can change the view direction (PD) of the virtual camera, thereby further improving the flexibility of the operation of the camera while stably displaying a photographed image.

Another aspect of the invention is the game software, wherein the procedure for changing movement path (MPP) changes the movement path (MP) of the virtual camera according to a first signal (CS1) from the input means (14), and the game software (GSW) has a program for getting the computer (1) to further execute a procedure for fixing movement path (MPP), for fixing a changing state (e.g. Δ S) of the movement path (MP) changed by the procedure for changing movement path (MPP) according to a second signal (CS2) from the input means (14), and a procedure for returning to default path (MPP), for changing the movement path (MP) of the virtual camera from the movement path (MP) the changing state (e.g. Δ S) of which has been fixed by the procedure for fixing movement path (MPP) into the default path (MP_{D}) according to a third signal (CS3) from the input means (14).

According to this aspect of the invention, a player can freely fix the state of the changed movement path (e.g. Δ S), and at the same time, the movement path (MP) a changed state (e.g. Δ S) of which has been fixed can be always returned to the default path (MP_{D}), thereby making the operation of the camera easier. Therefore, the operability of the camera can be improved while maintaining the flexibility of operation of the camera.

Besides, another aspect of the invention is a game machine having the above-mentioned characteristics.

The number in parentheses shows the corresponding element in the drawings for the sake of convenience in order to easily understand the invention, accordingly, the present descriptions are not restricted and bound by the descriptions on the drawings. Besides, the present invention should not be interpreted by these numbers.

### BRIEF DESCRIPTION OF DRAWINGS

[Fig.1] Fig.1 is a view showing a control block of a game machine.
[Fig.2] Fig.2 is a side view showing a right joystick (a part thereof is omitted).
[Fig.3] Fig.3 is a view showing a structure of game software.
[Fig.4] Fig.4 is a view conceptually showing a virtual camera.
[Fig.5] Fig.5 is an upper sectional view showing a cave which is an instance of a field (a part thereof is omitted).

### EXPLANATION OF REFERENCE NUMBERS

1... ...computer, game machine (game machine)
2......means for producing and locating polygon, means for controlling to move operation object, means for controlling to move virtual camera, means for changing movement path, means for instructing changed path movement, means for computing distance, means for detecting background object, means for instructing to correct movement path (CPU)
3DS... ...three-dimensional virtual space
8......means for producing and displaying two-dimensional image (image processing unit)
11... ...display
14......input means (controller)
ANP... ...procedure for producing and displaying two-dimensional image, means for producing and displaying two-dimensional image (image processing program)
CH1... ...operation object (operation character)
CM... ...virtual camera
CS1... ...first signal (operation signal)
CS2... ...second signal (operation signal)
CS3... ...third signal (operation signal)
CV... ...field (cave)
CWP... ...procedure for controlling to move virtual camera, procedure for controlling view direction, procedure for instructing change of view direction, procedure for controlling to move virtual camera (camerawork processing program)
FD... ...field
GSW... ...game software
MP... ...movement path
MP_{D}... ...default path
MPP... ...procedure for changing movement path, procedure for instructing changed path movement, procedure for fixing movement path, procedure for returning to default path, means for changing movement path, means for instructing changed path movement (movement path changing program)
PD... ...view direction
PDP... ...procedure for producing and displaying two-dimensional image, means for producing and displaying two-dimensional image (image data producing program)
PGP... ...procedure for producing and locating polygon, procedure for controlling to move operation object, means for producing and locating polygon, means for controlling to move operation object (polygon processing program)
SMP... ...procedure for computing distance, procedure for detecting background object, procedure for instructing to correct movement path, means for computing distance, means for detecting background object, means for instructing to correct movement path (shifting value correcting program)
WL_{R}... ...background object (right wall)
Δ S... ...changing state (shifting value)

### BEST MODE FOR CARRYING THE INVENTION

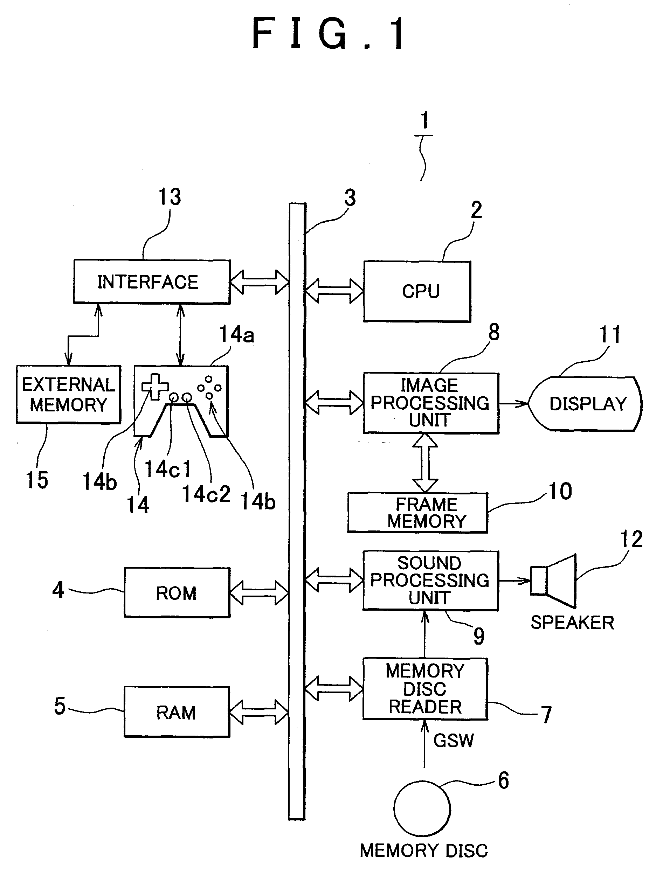

As shown in Fig.1, a game machine 1 is a game machine for home use, and has a CPU 2 a main body of which is a microprocessor. A ROM 4, a RAM 5, an image processing unit 8, a sound processing unit 9, a memory disc reader 7, and an interface 13 are connected with the CPU 2 through a bus 3.

A memory disc 6 functions as a storage medium, and is an optical storage medium. A game software GSW comprised of programs and data which are necessary for execution of a game is stored in the memory disc 6. The game machine 1 executes a predetermined game according to the game software GSW which is stored in the memory disc 6. The memory disc reader 7 reads the programs and the data out of the game software GSW in response to the instruction from the CPU 2, and outputs a signal corresponding to the read contents.

Various storage mediums, such as a semiconductor storage element, a magnetic storage medium, and a photoelectric magnetic storage medium, may be used as the memory disc 6, in addition to an optical storage medium. Alternatively, the game software GSW is read out of a server which is independent from the game machine 1 through communication medium means, such as the Internet with no such storage medium.

The ROM 4 and the RAM 5 function as main memories with respect to the CPU 2, and a multitasking operating system (multitasking OS), a program for controlling the whole actions in the game machine 1 is written in the ROM 4. The program and the data which are read out of the game software GSW through the memory disc 6 are written in the RAM 5, if necessary.

A frame memory 10 and a display 11 are connected with the image processing unit 8, and the image processing unit 8 receives two-dimensional image data from the CPU 2 and draws a photographed image on the frame memory 10, and converts the drawn photographed image into a predetermined video regenerative signal so as to output it to the display 11 at a proper timing. A home television receiver is generally used as the display 11.

The memory disc reader 7 and a speaker 12 are connected with the sound processing unit 9, and the sound processing unit 9 reproduces data, such as voice and sound, or sound source data which are read out of the memory disc 6 through the memory disc reader 7 so as to output to the speaker 12. A built-in speaker of the television receiver is generally used as the speaker 12.

A controller 14 and an external memory 15 are attachably and detachably connected with the interface 13 through a proper connecting port. A plurality of the controllers 14 and the external memories 15 may be connected with the interface 13 in parallel.

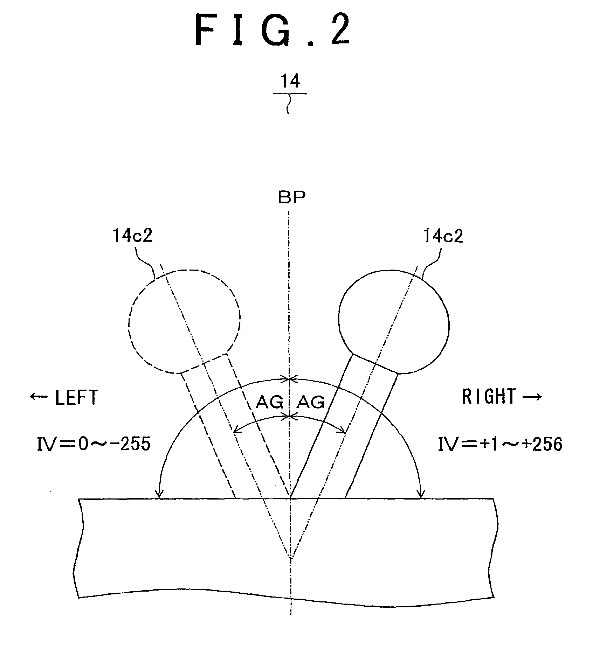

The controller 14 functions as an input means, and has a main body 14a which is connected with the interface 13. The main body 14a has a direction indicating switch 14b having a cross shape, a left joystick 14c1, a right joystick 14c2 and four push button switches 14d as operation members. Details of the right joystick 14c2 as shown in Fig.2 will be mentioned later.

An operation signal corresponding to the operation state of each operation members 14b, 14c1, 14c2 or 14d is inputted into the RAM 5 from the controller 14 at a constant period (at sixty cycles per a second, for instance), and the CPU 2 judges the operation state of the controller 14 on the basis of the operation signal.

The main body of the game machine 1 is comprised of all structural elements excluding the display 11, speaker 12, the controller 14, the memory disc 6 and the external memory 15, which are stored in the same predetermined housing, and functions as a computer.

In the present embodiment, a computer is a game machine for home use. But, a computer may be a portable game machine or a game machine for an arcade. Besides, a computer may not be a device dedicated for a game, but may be a device for playing back general music and images stored in a storage medium. Furthermore, any computer, such as a personal computer and a mobile phone, a personal digital assistant (PDA) is available as long as game software can be executed thereby.

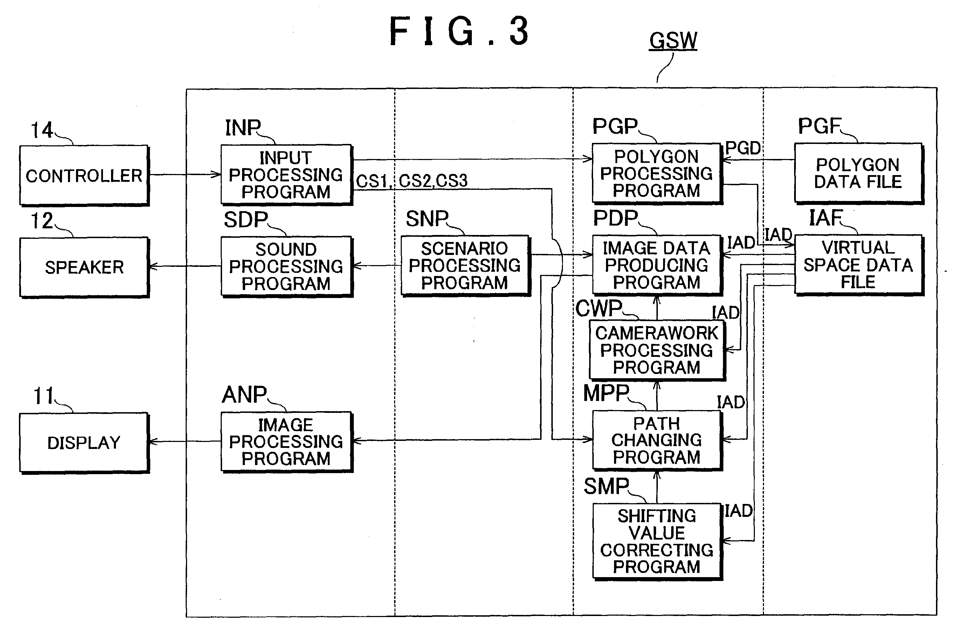

As shown in Fig.3, the game software GSW is formed as a hierarchical structure with a plurality of modularized programs for advancing a game.

Programs for processing a user interface, such as an input processing program INP, a sound processing program SDP and an image processing program ANP are stored in a lower hierarchy as shown in the left hand of Fig.3. And, a scenario processing program SNP is stored in an upper hierarchy in a central part of Fig.3. Besides, programs for executing and controlling various kinds of tasks necessary for game progress, such as a polygon processing program PGP, an image data producing program PDP, a camerawork processing program CWP, a path changing program MPP and a shifting value correcting program SMP are stored in a further upper hierarchy on the right hand of Fig.3. And, data areas, such as a polygon data file PGF and a virtual space data file IAF, are set on the upper hierarchy as shown in the right hand of Fig.3.

Various kinds of data which are stored in the data area of the game software GSW may be stored in any form as long as the data is freely read out through the game software GSW. These data are stored in the memory disc 6 together with the game software GSW. Alternatively, these data may be stored in an external memory means, such as a server independent from the game machine 1, and may be downloaded to a memory means, such as the RAM 5, through a communication medium means, such as the Internet, by the read program set in the game software GSW.

A plurality of tasks produced on the basis of the respective programs PGP, PDP, ... of the game software GSW are executed in order according to priority with amultitaskingoperatingsystem (multitask OS). The above-mentioned hierarchical structure is simply shown with only programs necessary for explaining the invention, so the real hierarchical structure is more complex and includes various kinds of programs, such as a parallel processing program. An arrow for showing an instruction or delivery of data is shown between the respective programs in order to easily understand the invention. So, how to process with a program or how to deal with data is not limited by these arrows.

Various kinds of games can be played on the display 11 with the game machine 1 having the above-mentioned structure when downloading the game software GSW which is stored in the memory disc 6 to the RAM 5, and executing this with the CPU 2.

In the game machine 1, the CPU 2 firstly executes a predetermined initialization process according to the program of the ROM 4 after a predetermined initialization operation (the operation of turning the power on, for instance). When the initialization finishes, the CPU 2 starts to read out the game software GSW which is stored in the memory disc 6 and to store it in the RAM 5, and starts game processing according to the game software GSW. When a player operates a predetermined game start through the controller 14, the CPU 2 starts various controls necessary for the execution of the game according to the routines of the game software GSW.

The game in the present embodiment is one on the basis of 3DCG (three-dimensional computer graphics) with polygons. In such a game, various kinds of fields FD locating an enemy character therein are produced in a three-dimensional virtual space, a player defeats the enemy character by moving an operation character CH1 on the produced field FD through the controller 14, so that the game is advanced.

The CPU 2 firstly set a three-dimensional virtual space of a world coordinate system with X-, Y-, and Z-coordinates in the virtual space data file IAF as shown in Fig. 3 set in the RAM 5. After setting the three-dimensional virtual space, the polygon data file PGF set in the RAM 5 is referred according to the polygon processing program PGP by developing a scenario in the scenario processing program SNP of Fig.3.

Polygon data PGD is stored in the polygon data file PGF, and the polygon data PGD show various kinds of background objects comprising the field FD. Concretely speaking, various kinds of backgrounds, such as "building" and "cave", are prepared. The polygon data file PGF stores the polygon data PGD which show the background objects, such as a pole, a wall, a door, a ceiling, a floor for forming "building" and a wall, a ceiling and a ground for forming "cave". And, the polygon data file PGF also stores the polygon data PGD which show the characters, such as the operation character CH1 and the enemy character.

The CPU 2 refers to the polygon data file PGF, and reads the polygon data PGD of the background objects comprising the filed FD corresponding to a scenario out of the polygon data file PGF. And, the CPU 2 produces the filed FD on the basis of the read polygon data PGD and stores in the virtual space data file IAF setting the three-dimensional virtual space therein as virtual space data IAD. That is, the field FD is produced in the three-dimensional virtual space.

After producing the field FD, the CPU 2 reads the polygon data PGD which show the operation character CH1 and the enemy character out of the polygon data file PGF according to the polygon processing program PGP. And, the CPU 2 produces the characters according to the read polygon data PGD, and locates the produced characters at predetermined positions in the field FD, and stores the data concerning the characters as the virtual space data IAD in the virtual space data file IAF together with the data concerning the field FD so as to renew the data. That is, the operation character CH1 and the enemy character are located in the field FD.

When the player inputs an operation signal of a predetermined direction through the left joystick 14c1 of the controller 14 in the above-mentioned state, the CPU 2 moves the operation character CH1 located in the field FD on the basis of the direction of the inputted operation signal according to the polygon processing program PGP, so that the virtual space data IAD is newly produced, and the virtual space data IAD are renewed in order, and the renewed data are stored in the virtual space data file IAF. That is, the operation character CH1 is moved in the field FD through the left joystick 14c1.

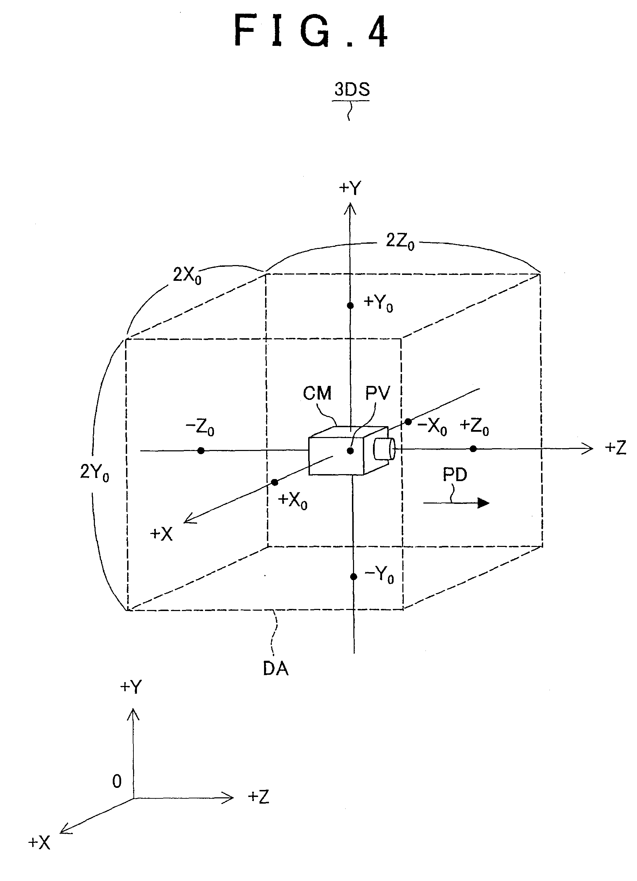

Then, the CPU 2 executes a camerawork processing of a virtual camera as shown in Fig.4 ("the virtual camera CM" hereinafter) according to the camerawork processing program CWP of Fig.3 in addition to the processing for moving the operation character CH1.
Fig.4 is a conceptual view of the virtual camera CM. X-, Y-, and Z-coordinates are set as shown in the left lower hand of Fig.4. As shown in Fig.4, the virtual camera CM is located at a view point PV. In the figure, a view direction PD of the virtual camera CM with an arrow is +Z direction, so that a three-dimensional virtual space 3DS in the +Z direction from the view point PV is set as view bounds. A detected area DA shown with a broken line will be mentioned hereinafter.

The virtual camera CM is moved on a movement path MP (not shown), following the operation character CH1 in a camerawork processing. Concretely speaking, a default path MP_{D} is set in the field FD as a default movement path MP. The CPU 2 sets a position on the default path MPD_{D} on the rear side of the operation character CH1 (on the opposite side to a going direction of the operation character CH1), spacing a predetermined distance from the operation character CH1 as a view point PV. And, the view direction PD of the virtual camera CM is the same as the direction of the default path MP_{D}.

When the operation character CH1 is moved, the CPU 2 reads the virtual space data IAD out of the virtual space data file IAF, and sets the view point PV on the rear side of the position where the operation character CH1 is located represented by the virtual space data IAD according to the camerawork processing program CWP. The processing of setting the view position PV is repeated with the movement of the operation character CH1, and the CPU 2 locates the virtual camera CM on the view point PV set in order so that the view direction PD can correspond with the direction of the default path MP_{D}. That is, the camera is moved, following the operation character CH1.

When moving the camera, following the operation character CH1, the CPU 2 reads the virtual space data IAD out of the virtual space data file IAF, and produces two-dimensional image data which show the polygons located in the view bounds of the virtual camera CM according to the image data producing program PDP of Fig.3.

The image processing unit 8 produces a photographed image in the frame memory 10 with the produced two-dimensional image data, and displays it on the display 11 according to the image processing program ANP of Fig.3. That is, the photographed image showing the three-dimensional virtual space 3DS seen from the rear side of the operation character CH1 is displayed on the display 11.
When the player moves the operation character CH1 in the filed FD through the controller 14 in the above-mentioned way, the camera is moved, following the operation character CH1, so that the game is advanced. As mentioned before, the enemy character is located in the field FD, and the player properly defeats the enemy character through the controller 14.

The CPU 2 thus develops the scenario in the scenario processing program SNP so as to advance the game, and produces a cave CV which is the field FD of Fig.5 inside the three-dimensional virtual space 3DS. Fig.5 is an upper sectional view (a part thereof is omitted) showing the cave CV which is an instance of the field FD. X, Y, and Z coordinates are set as shown in a left lower portion of the Fig.5.

The cave CV faces the Z direction, as shown in Fig. 5, and has an entrance ET on the lower hand and an exit EX on an upper hand in the figure. And, the cave CV is formed, enclosed with the background objects, such as a left wall WL_{L}, a right wall WL_{R}, a ceiling CL (not shown) and a ground GR. A cylindrical portion CY is cylindrically formed at the left wall WL_{L}, projecting from the left wall WL_{L}. An enemy character CH2 is located at Position P5 on the rear side of the cylindrical portion CY, hiding away from the view bounds of the virtual camera CM located at Position P11.

The default path MP_{D} (full line) is set inside the cave CV. The default path MP_{D} is properly bent according to shapes of the walls WL_{L} and WL_{R}, keeping the camera so as not unnecessarily deeply enter the walls WL_{L} and WL_{R} (that is, so that the view point PV can not enter inside the polygon forming an obstacle) (so as to avoid the cylindrical portion CY in this case).

In order to pass through the cave CV, the player gets the operation character CH1 to enter the cave CV through the entrance ET via left joystick 14c1 of the controller 14 so as to move in a +Z direction.

Then, the CPU 2 moves the virtual camera CM on the default path MP_{D}, following the operation character CH1, according to the camerawork processing program CWP as shown in the lower hand of Fig.5. When the operation character CH1 passes through a position P1, for instance, the CPU 2 locates the virtual camera CM on the position P11, for instance, on the rear side of the operation character CH1. The image processing unit 8 displays a photographed image showing an inside of the cave CV on the display 11 on the basis of the virtual camera CM located on the position P11. At this point of time, the operation character CH1 which located on positions P2 and P4 of Fig.5 has not already appear in the figure.

In the above-mentioned state, with an operation of the right joystick 14c2 of Fig.2 by the player, an operation signal CS1 is inputted from the right joystick 14c2 into the RAM 5 and the CPU 2 executes the processing of changing the movement path MP according to the path changing program MPP of Fig.3.

In this processing of changing the movement path MP, the view point PV is changed, moving in a direction orthogonal to the default path MP_{D} and in a direction level with the ground GR. This quantity of change is represented by a shifting value Δ S, and the shifting value Δ S means a distance (in the world coordinate system) for which the view point PV moves from the default path MP_{D}. The view point PV may move in a +Y direction with respect to a projection of the ground GR.

The shifting value Δ S is set so as to be changed according to the operation signal CS1 from the right joystick 14c2. Concretely speaking, when inclining the right joystick 14c2 in any of right and left directions from a standard position BP (a dashed line) as shown in Fig.2, the operation signal CS which shows an input value IV corresponding to an angle AG with respect to the standard position BP is inputted.

The input value IV is changed from +1 through +256 as the angle AG inclined in the right direction is big. On the contrary, it is changed from zero (0) through -255 as the angle AG inclined in the left direction is big. Ranges zero (0) through + Δ S respectively corresponding to the input values +1 through +256 are set for the shift value Δ S, and ranges zero (0) though - Δ S respectively corresponding to the input values zero (0) through -255 are set for the shift value Δ S.

When changing the movement path MP, the view direction PD may be changed. The virtual camera CM may be rotated while the view direction PD is fixed toward a predetermined position (such as the position of the operation character CH1), thereby improving flexibility of the camerawork.

When the operation signal CS1 is inputted, the CPU 2 computes the shift value Δ S corresponding to the input value IV which is shown with the inputted operation signal CS1 according to the path changing program MPP. If the player inclines the right joystick 14c2 in the right direction so that the shift value Δ S becomes Δ S1, the CPU 2 computes the shift value Δ S1 from the input value IV which was inputted. Then, the view point PV is set on a position P21 which the shift value Δ S1 parallel shifted in the +X direction from the position P11, as shown in the lower hand of Fig.5.

If the virtual camera CM approaches the background object, such as the walls WL_{L} and WL_{R}, the CPU 2 executes a processing of correcting the shift value Δ S which is described later. But, in this case the virtual camera CM is located on the position P21 as shown in Fig.5 without executing the processing of correcting the shift value ΔS supposing that the virtual camera CM does not approach the walls WL_{L} and WL_{R}.

As already mentioned, the operation signal CS1 from the right joystick 14c2 is set to be inputted into the CPU2 at a constant cycle (such as each 1/60 second). While the right joystick 14c2 is inclined, that is, while the operation signal CS1 is inputted, the above-mentioned processing of changing the movement path MP is successively executed.

If the player changes the angle AG by inclining the right joystick 14c2 in the right direction, the CPU 2 computes the respective shift values Δ S according to the input values IV shown with the successively inputted operation signals CS1. And the virtual camera CM is moved on a changed movement path MPc1 (full line) which parallel moved for the shift value ΔS from the default path MP_{D} in the +X direction. That is, the movement path MP is changed into the changed movement path MPc1 from the default path MP_{D}.

If the player returns the right joystick 14c2 (by releasing hold of the joystick, for instance) to the standard position BP, the operation signal CS1 is not inputted, so that the CPU 2 changes the movement path MP from the changed movement path MPc1 into the default path MP_{D} again without executing the processing of changing the movement path MP. Thereafter, the virtual camera CM is moved on the default path MP_{D}. Supposing that the player returned the right joystick 14c2 to the standard position BP in this case, the virtual camera CM is moved on the default path MP_{D}.

The operation character CH1 is thus moved in the +Z direction and the virtual camera CM is moved on the default path MP_{D}. When the virtual camera CM passes through a position P12, the player may incline the right joystick 14c2 in the right direction again in order to see the rear side of the cylindrical portion CY.

If the player inclines the right joystick 14c2 in the right direction so that the shift value Δ S becomes Δ S2, the CPU 2 computes the shift value Δ S2 from the input value IV in a similar way to the above-mentioned. And then, the view position PV is set on the position P22 which parallel moved the shift value Δ S2 in the +X direction from the position P12.

The view position PV which has been set on the position P22 is to be set inside the right wall WL_{R} as shown on the right hand of Fig.5, but, the CPU 2 executes the processing of correcting the shift value Δ S which is the main point of the invention according to the shifting value correcting program SMP as shown in Fig. 3. This processing of correcting is executed according to the detecting area DA of Fig.4

For the virtual cameral CM, the detecting area DA for detecting the background obj ect which is adjacent to the virtual camera CM is set, as shown with an broken line of Fig.4. In this case, the detecting area DA is a space including the virtual cameral CM. Concretely speaking, the detecting area DA is a rectangular parallelepiped respectively having lengths of the three sides, 2X₀, 2Y₀ and 2Z₀, a central position of which corresponds with the view position PV.

The detecting area DA is not always a rectangular parallelepiped so long as the area is the space including the virtual camera, and may have any shape, such as a sphere. Besides, the detecting area DA does not always include the virtual camera CM so long as the area can detect the background object which is adjacent to the virtual camera CM. That is, the detecting area DA may be an area which is actually photographed by the virtual camera CM. In this case, the detecting area is changeably computed since the photographed area is variable according to the state of the virtual camera CM, such as zoom lens, and wideangle.

In the processing of correcting the shift value Δ S, as to whether or not the detecting area DA contacts with the background object is judged. If judging the contact of the detecting area DA, a constant value Δ S_{CT} is subtracted from the shift value Δ S. On the contrary, when judging non-contact of the detecting area DA, the processing of changing the movement path MP is executed, using the shift value Δ S as it is when computed without subtracting the shift value Δ S.

That is, the CPU 2 reads the virtual space data IAD out of the virtual space data file IAF according to the shifting value correcting program SMP, and judges as to whether or not the detecting area DA contacts with the background object, such as the walls WL_{L} and WL_{R}. The detecting area DA contacts with the right wall WL_{R} as shown in the right hand of Fig.5, so that the CPU 2 judges the contact of the detecting area DA and subtracts the constant value Δ S_{CT} from the shift value Δ S2.

This judgment and subtracting processing is repeated till the judgment is that the detecting area DA does not contact with the background object. When repeatedly subtracting the shift value Δ S2 so as to become Δ S3, the detecting area DA does not contact with the right face WL_{R}, as shown in Fig.5. Then, the CPU 2 judges that the detecting area DA does not contact with the right wall WL_{R}.

If judging non-contact, the CPU 2 sets the view position PV on a position P23 the shift value Δ S3 parallel moved from the default path MP_{D} in the +X direction and sets the virtual camera CM on the position P23. That is, the virtual camera CM is located at a position a distance X₀ apart from the right wall WL_{R}.

The image processing unit 8 displays a photographed image on the display 11 on the basis of the virtual camera CM located on the position P23, and the enemy character CH2 hidden at the position P5 on the rear side of the cylindrical portion CY appears on this photographed image.

When the operation signal CS1 showing the contact between the detecting area DA and the right wall WL_{R} (that is, the shift value ΔS is bigger than Δ S3) is inputted, the shift value ΔS is amended into the value Δ S3 with which the right wall WL_{R} and the detecting area DA do not overlap, similar to the above-mentioned. Then, the virtual camera CM moves on a changed movement path MPc2 (full line) after moving the shift value Δ S3 in the +X direction from the default path MP_{D}. In other words, the movement path MP is amended into the changed movement path MPc2, making the position of the camera which is instructed by the player (the movement path MP) apart from the background object.

While the player can thus freely set the position of the virtual camera CM (the view position PV), the position of the virtual camera CM is limited in a narrow path, such as the cave CV, so that the distance between the virtual camera CM and the background object, such as the walls WL_{L}, WL_{R} is not a predetermined value nor lower.

The virtual camera does not enter the background object, properly maintaining free control of the operation of the camera, so that a proper photographed image can be stably displayed while flexibly setting the position of the camera even if the field FD has many obstacles therein.

In the above-mentioned processing of correcting the movement path MP, the shift value ΔS is computed. But, any processing of correcting is available as long as the movement path MP can be corrected according to a change form. In a form of changing the movement path MP by selecting one of a plurality of paths which are set in the field FD in advance, an optional path which does not contact with the detecting area DA may be selected from a plurality of paths as the movement path MP.

When pressing the right joystick 14c2 in the axial center direction thereof while being inclined in the processing of correcting the shift value Δ S, an operation signal CS2 is inputted in the CPU 2 from the right joystick 14c2. Then, the CPU 2 stores the shift value Δ S in a predetermined data area of the RAM 5, maintaining the shifting value Δ S at the time when the operation signal CS2 has been inputted.

Let us suppose that the player presses the right joystick 14c2 in the axial center direction thereof while the right joystick 14c2 being inclined in order to fix the shift value Δ S on Δ S3 when moving the virtual camera CM on the changed movement path MPc2.

The shift value ΔS at the time when moving the virtual camera CM on the changed movement path MPc2 is Δ S3 as shown in the right hand of Fig.5, so that the CPU 2 receiving the operation signal CS2 stores the shift value Δ S3 in a predetermined data area of the RAM 5 according to the path changing program MPP. When storing the shift value Δ S3 in the RAM 5, the shift value ΔS is fixed on Δ S3 irrespective of the operation signal CS1 inputted from the right joystick 14c2, so that the virtual camera CM moves on the changed movement path MPc2 together with the movement of the operation character CH1 even if the player returns the right joystick 14c2 to the standard position BP. That is, the changed movement path MPc2 is fixed as the movement path MP by fixing the state of change shown by the shift value Δ S.

If the right joystick 14c2 is again pressed in the axial direction thereof after inputting the operation signal CS2 from the right joystick 14c2 in the processing of correcting the shift value, an operation signal CS3 is set to be inputted. When inputting the operation signal CS3, the CPU 2 sets the shift value ΔS which is stored in the RAM 5 on NULL, and changes the movement path MP from the changed movement path MPc2 into the default path MP_{D}.

If the player presses the right joystick 14c2 in the axial center direction again in order that the virtual camera CM may return to the default path MP_{D} when the operation character CH1 passes through a position P4 and the virtual camera CM reaches the position P24, the CPU 2 receives the operation signal CS3, and sets the shift value Δ S which is stored in the RAM 5 on NULL according to the path changing program MPP, and changes the movement path MP from the changed movement path MPc2 into the default path MP_{D}.

Then, the virtual camera CM is moved from the position P24 to a position P14 on the default path MP_{D}, as shown in Fig.5, and is moved on the default path MP_{D}, so that the operation character CH1 passes through the cave CV from the exit EX.

The player can thus freely maintain the changed movement path MPc2 which the player desires as the movement path MP with the operation signal CS2. Furthermore, the changed movement path MPc2 can always return to the default path MP_{D} with the operation signal CS3. Therefore, a proper image can be stably displayed with a simple operation of the right joystick 14c2, thereby improving the operability of the camera while maintaining the flexibility of operation of the camera.

In the above-mentioned embodiment, the invention is the game software GSW. But, the invention may be a game machine, for instance, as long as the game machine has programs comprised of various kinds of programs in the game software GSW, such as the program PGP and PDP, and the hardware through which the program functions.

### INDUSTRIAL APPLICABILITY

The invention can be applied to game software for operating a virtual camera. And, the invention can be also applied to a game machine for home use, a portable game machine, a game machine for an arcade, a mobile phone, a PDA (personal digital assistant), and a personal computer.

## Claims

1. Game software having a program for getting a computer to execute a game for controlling to move an operation obj ect operable according to a signal from an input means in a field produced in a three-dimensional virtual space, comprising:
said game software having program for getting said computer to further execute the following procedures:
a procedure for producing and locating polygon, for producing polygons of said operation object and a background object comprising said field and for locating said polygons in said three-dimensional virtual space;
a procedure for controlling to move operation object, for controlling to move said operation object in said three-dimensional virtual space, where said background object was located by said procedure for producing and locating polygon, according to said signal from said input means;
a procedure for controlling to move virtual camera, for controlling to move a virtual camera for setting a view area inside said three-dimensional virtual space so as to follow said operation object controlled to be moved by said procedure for controlling to move operation object on a path which is set in said three-dimensional virtual space as a movement path of said virtual camera;
a procedure for changing movement path, for changing said movement path of said virtual camera from a default path which is in advance set in said three-dimensional virtual space into a different path rather than said default path according to said signal from said input means;
a procedure for instructing changed path movement, for instructing said procedure for controlling to move virtual camera to control said virtual camera to move on said movement path changed by said procedure for changing movement path from said default path;
a procedure for producing and displaying two-dimensional image, for producing a two-dimensional image by rendering of said polygon inside said view area which is set by said virtual camera controlled to be moved by said procedure for controlling to move virtual camera, and for displaying said two-dimensional image on a display;
a procedure for computing distance, for computing a distance between said virtual camera which moves on said movement path changed by said procedure for changing movement path and said background object located in said three-dimensional virtual space by said procedure for producing and locating polygon;
a procedure for detecting background object, for detecting said background object having said distance computed by said procedure for computing distance, which is a predetermined value or lower; and
a procedure for instructing to correct movement path, for instructing said procedure for changing movement path to correct said changed movement path so as to make said virtual camera apart from said background object detected by said procedure for detecting background object.

2. The game software according to claim 1, wherein said game software has a program for getting said computer to further execute a procedure for controlling view direction, for controlling a view direction of said virtual camera, and a procedure for instructing change of view direction, for instructing said procedure for controlling view direction to change said view direction of said virtual camera according to said signal from said input means.

3. The game software according to claim 1, wherein said procedure for changing movement path changes said movement path of said virtual camera according to a first signal from said input means, and said game software has a program for getting said computer to further execute a procedure for fixing movement path, for fixing a changing state of said movement path changed by said procedure for changing movement path according to a second signal from said input means, and a procedure for returning to default path, for changing said movement path of said virtual camera from said movement path said changing state of which has been fixed by said procedure for fixing movement path into said default path according to a third signal from said input means.

4. A game machine for controlling to move an operation object operable according to a signal from an input means in a field produced in a three-dimensional virtual space, comprising:
means for producing and locating polygon, for producing polygons of said operation object and a background object comprising said field and for locating said polygons in said three-dimensional virtual space;
means for controlling to move operation object, for controlling to move said operation object in said three-dimensional virtual space, where said background object was located by said means for producing and locating polygon, according to said signal from said input means;
means for controlling to move virtual camera, for controlling to move a virtual camera for setting a view area inside said three-dimensional virtual space so as to follow said operation object controlled to be moved by said means for controlling to move operation object on a path which is set in said three-dimensional virtual space as a movement path of said virtual camera;
means for changing movement path, for changing said movement path of said virtual camera from a default path which is in advance set in said three-dimensional virtual space into a different path rather than said default path according to said signal from said input means;
means for instructing changed path movement, for instructing said procedure for controlling to move virtual camera to control said virtual camera to move on said movement path changed by said means for changing movement path from said default path;
means for producing and displaying two-dimensional image, for producing a two-dimensional image by rendering of said polygon inside said view area which is set by said virtual camera controlled to be moved by said means for controlling to move virtual camera, and for displaying said two-dimensional image on a display;
means for computing distance, for computing a distance between said virtual camera which moves on said movement path changed by said means for changing movement path and said background object located in said three-dimensional virtual space by said means for producing and locating polygon;
means for detecting background object, for detecting said background object having said distance computed by said means for computing distance, which is a predetermined value or lower; and
means for instructing to correct movement path, for instructing said means for changing movement path to correct said changed movement path so as to make said virtual camera apart from said background object detected by said means for detecting background object.
